# EUROPEAN PATENT SPECIFICATION

(11) **EP 0 441 412 B1**
(45) Date of publication and mention of the grant of the patent: **10.08.1994**
(21) Application number: 91104708.2
(22) Date of filing: 11.12.1987
(51) Int. Cl.: D21F 1/00, D21F 1/12, F16G 3/02

(54) **Dryer fabric seaming**
Verbindung von Trocknerfilz
Joint pour feutre de séchage

(30) Priority: 18.12.1986 GB 8630243
(43) Date of publication of application: 14.08.1991
(62) Divisional of application: 87310922.7
(73) Proprietor: SCAPA-PORRITT LIMITED, Blackburn Lancashire BB2 2SZ (GB)
(72) Inventor: Hebblethwaite, Gerald, Blackburn Lancashire (GB)
(74) Representative: Quest, Barry

(56) References cited:
- EP-A- 0 196 686

## Description

This invention relates to the joining together of the two ends of a papermaking dryer fabric to form an endless belt.

This is a divisional application from Application No. 87310922.7 (274244).

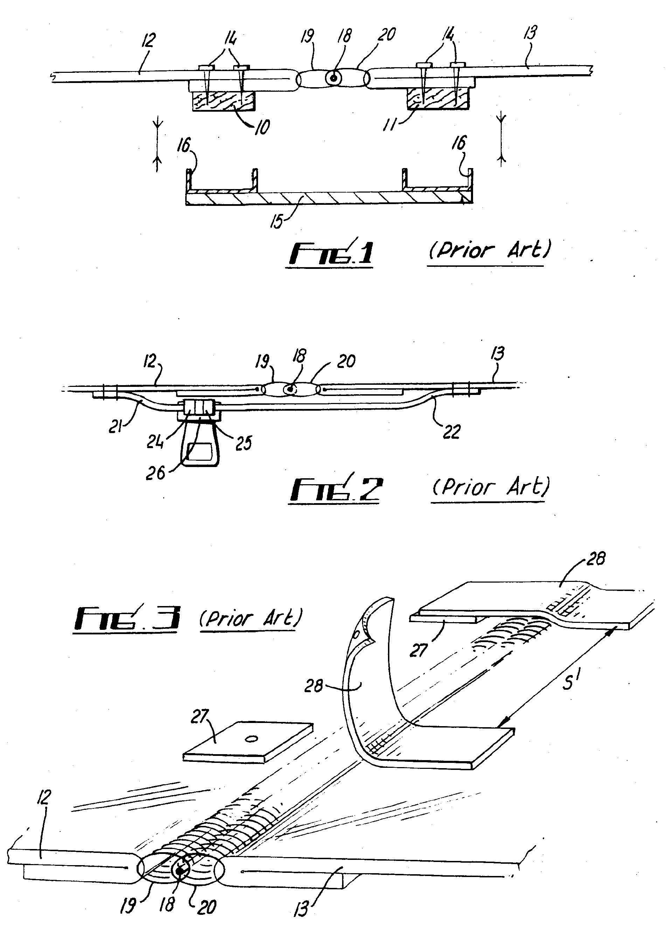

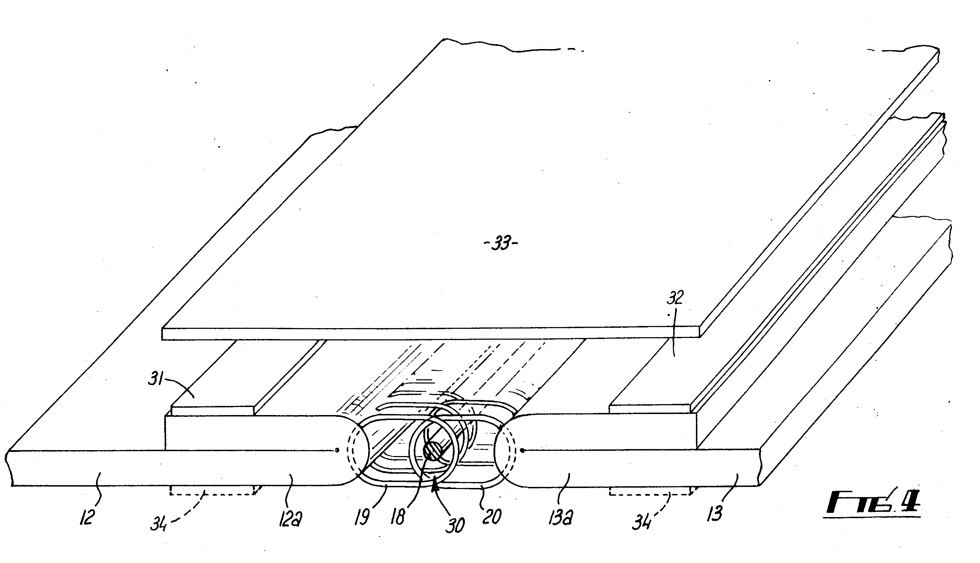

Such dryer fabrics may be from two to ten metres wide and from fifteen to over a hundred metres long and the making of a satisfactory seam quickly and easily is essential for the efficient operation of a dryer. To allow the formation of a seam, the free ends of the web (Fig. 1 or 2) are each provided with complementary interdigitating formations such as loops 19, 20 and/or hooks which, when in engagement, define a through passage through which a keeper such as a pintle wire 18 can be passed. Such a keeper formed joint has proved of great practical value because of its simplicity and flexibility. However, there is one major disadvantage in this type of joint. The ends of the web to be joined must be drawn towards each other carefully and the two rows of formations aligned accurately before the keeper can be inserted.

Many solutions have been proposed to this problem; but none is really satisfactory.

A first solution (Fig. 1) involves attaching a pair of battens 10, 11 to belt ends 12, 13 by fasteners such as nails 14, and providing, at the joint positions, a rigid receiving structure 15 which includes a pair of accurately spaced and sized channels 16. When the battens 10, 11 engage in channels 16, loop formations 19, 20 are aligned and the pintle wire 18 can be passed along the tunnel mutually defined by the two sets of formations 19, 20. This is fine in theory, but in practice, one batten is placed in its channel 16 and the other is then moved towards engagement. Because the battens 10, 11 extend rigidly across the entire belt width, such movement involves the application of tension to the entire belt width. Although belt tension is not unduly high, the width of the belt means that a considerable force needs to be exerted to draw the entire seam together simultaneously. Additionally, the fixed structure 15 is costly and must be placed in position on the machine before seaming and removed afterwards. The spacing of battens 10 and 11 from the formations 19, 20 is critical, any variation in this spacing resulting in lack of register between the sets of formations 19, 20 at positions along the seam, which lack of register cannot be readily and locally eliminated without considerable difficulty.

Further, once the members 10, 11 have been secured to the web ends, the face of the belt from which joining must be effected is determined. This can be a severe diadvantage, because, when a new belt is placed on a paper dryer, the exact position of the joint cannot be accurately determined. Even if a preferred face of the belt has been selected for making the seam, the seam may, after the new fabric has been loaded, be found to be too close to a dryer structure to enable seaming to be effected from the selected face. It would be ideal in this situation to make the seam from the other face. However, with the batten arrangement this is not possible, and so such a condition would, with the battens, require that the entire belt be inched to a position in which the seam in accessible from the selectable face. Such a procedure is time consuming and difficult in a dryer, which has large components of high inertia.

A second attempt to overcome the problem has been reasonably successful and this solution is shown in Fig. 2. Here the ends 12, 13 of the web have attached to them respective strips 21, 22 of a sliding clasp fastener whose stringers 24, 25 can be united by slider 26. Strips 21, 22 carrying stringers 24, 25 extends beyond the edges of the belt. The construction and use of this temporary jointing means is shown in U.K. Patents Nos. 1522801 and 1547122.

This solution again has the disadvantage that it is a "one-face" solution, union must be effected from that face of the belt remote from that to which the strips 21, 22 are sewn. Additionally, once the sliding clasp fastener is closed, the seam is not necessarily closed. Even if the strips 21, 22 are accurately sewn at a predetermined spacing from the formations 19, 20 variations in belt length and tension, due to machine tolerances and belt construction tolerances, can lead to lack of alignment at positions along the seam. The fact that the fasteners completely cover the seam means that such irregularities cannot easily be seen and are only discovered when it is found that the threading of the pintle wire will not proceed. In such a circumstance additional manual alignment must be effected at the "gap" or "gaps" left in the seam. The full length closed nature of the sliding clasp fastener does not allow an individual part of the seam to be adjusted without unfastening from one end or the other. To open from the end not yet threaded means loss of alignment. To open from the threaded end means that the belt ends pull apart and grip the pintle wire, prevention or hindering further threading.

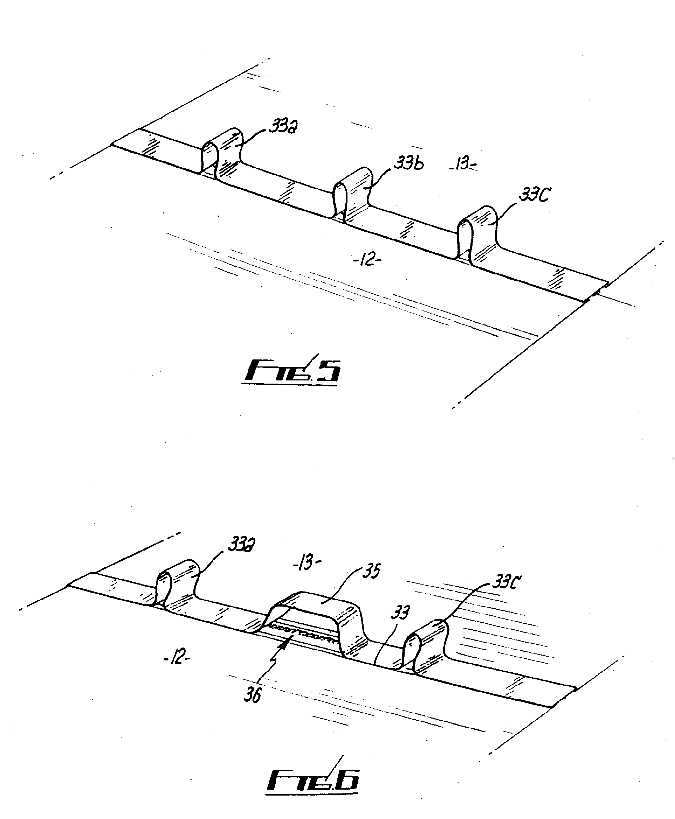

A still further attempt to solve the problems is shown in Fig. 3 and in Research Disclosure No. 2244 May 1982 No. 21710. Here small pads 27 of grip material (such as a hook or pile fastener) are secured to fabric ends 12 and straps 28 of complementary surface-grip material (such as a pile or hook fabric) are secured to fabric end 13. Straps 28 overhang the formations 20 and can be press-fitted to pads 27 to hold the formations 19, 20 together whilst the pintle wire 18 is threaded in. Such seam preclosure means is quite useful, but still has some serious problems. Firstly, because the straps 28 overhang the edge formations 20 of fabric end 13, there is danger that such overhanging straps become trapped between formations 20, 19 on assembly and interfere with the uniting of the ends. Secondly, the arrangement is one-faced, in that it only allows seaming to be carried out from one face of the belt. Further, the straps and pads are spaced apart along the seam at such spacings 'S' that seam irregularities can arise between adjacent pairs of fasteners. If this does happen, the fasteners 27, 28 simply cannot be adjusted to counteract any such misalignment. Another disadvantageous result of the spacing of the fastener pairs 27/28 is the fact that the spacing imposes considerable loads on pads 27 and straps 28. This load is well within the surface-to-surface load range of the fasteners, but does require that the pads and straps be very securely attached, as by sewing, to ends 12, 13. This means that removal of the fasteners after seaming, and before dryer operation, requires some time and effort.

A still further disadvantage of this known seaming arrangement is that the pads 27 and straps 28 are attached very close to formations 19, 20, which means that the tension application points are only just behind formations 19, 20. This means that formations 19 and 20 cannot be so easily manoeuvred in directions at right angles to the belt plane. Interestingly, this is a step backwards compared with the structures of Figs. 1 and 2, both of which apply belt tension at positions spaced away from the fastening formations to leave a small band of belt along each belt end substantially free from tension, thus facilitating manipulation of formations 19, 20.

EP 0196686 describes a device for joining the ends of a papermaking drying sheet to form a continuous strip. The device comprises a support bar having grooves therein which extend over the entire length of the bar. Bars having a complementary shape to that of the grooves are fixed to the ends of the drying sheet. The bars are received in the grooves during the jointing operation. This design does not facilitate adjustment of the spacing of the ends of the sheet.

It is an object of the present invention to provide a dryer fabric seaming arrangement whereby some, at least, of the above discussed disadvantages are obviated or reduced.

The invention provides a flat woven papermakers' dryer fabric having, at each end (12,13), a respective row of interdigitable formations (19,20) capable of union by a pintle wire (18) to form a flexible joint and further including at the said fabric ends (12,13), a respective one (part 31,32 and 34,34) of the complementary parts (31,32,34,34 and 33) of a temporary fastening means adapted for cooperation, in a relative disposition of the fabric ends (12,13) consistent with engagement of the interdigitating formations (19,20) to maintain such interdigitation, wherein said one part of the complementary parts of said temporary fastening means (31,32,34,34) is arranged to extend transversely of the belt adjacent each end (12,13) of the belt and on each face thereof; and in that the other part (33) of said complementary parts of said temporary fastening means is dimensioned materially to overlie the opposed fabric ends (12,13) in the aforesaid disposition of said ends (12,13) and said complementary parts (31,32 or 34,34) of the temporary fastening means on one or other face of the belt, characterised in that said other part (33) of said complementary parts of said temporary fastening means is selectively separable from said one part (31,32 or 34,34) along the length of the seam.

The invention also provides a method of seaming a flat woven papermakers' dryer fabric having, at each fabric end (12,13) a respective row of interdigitable formations (19,20) capable of union by a pintle wire (18) to form a flexible joint, and further including, at said fabric ends, (12,13) a respective one (31,32 and 34,34) of the complementary parts (31,32,34,34,33) of a temporary fastening means adapted for cooperation, in a relative disposition of the fabric ends (12,13) consistent with engagement of the interdigitation formations (19,20) to maintain such interdigitation, the method of including the steps of:
(a) providing said one part (31,32 or 34,34) of the complementary parts of said temporary fastening means to extend transversely of the belt adjacent each end (12,13) of the belt and on each face thereof;
(b) selecting one or other side of said belt on which to carry out a seaming operation;
(c) applying the other part (33) of said complementary parts of said temporary fastening means to overlie the one part (31,32 or 34,34) on the selected side of the belt;
(d) engaging the complementary parts of the fastening means [(31,32 and 33) or (34,34 and 33)] to maintain said formations interdigitated and capable of receiving a pintle wire (18);
(e) introducing a pintle wire to engage the interdigitated formations (19,20) to form a flexible joint;
(f) removing said other part (33) of said temporary fastening means; and:
(g) removing said one part of the temporary fastening means (31,32 and 34,34) from each face of the belt, characterised in that during step (e) a selected portion of the incipient seam is exposed by separating a selected portion of said complementary parts (31,32 and 33 or 34,34 and 33) of said temporary fastening means, portions of the belt ends (12,13) at said selected portion of said seam are adjusted to vary the degree of interdigitation of said formations (19,20) to permit easier passage of said pintle wire (18) and said complementary parts of said temporary fastening means are re-engaged.

The invention will now be described further, by way of example, with reference to the accompanying diagrammatic drawings, wherein:-
Fig. 1 is an end elevation showing a first prior known system for joining the two ends of a dryer fabric;
Fig.2 is a similar view to that of Fig.1 and shows a second known system;
Fig.3 is a perspective view of a third known system;
Fig.4 is a perspective view of a preferred embodiment of the invention;
Figs. 5 and 6 are perspective sketch views showing possible uses of the system of Fig. 4.

The prior art of Figs. 1 to 3 has been discussed in detail in the introductory paragraphs hereof, and will not be discussed further here.

In a preferred arrangement of the invention, Figs. 4 to 6, a flat woven dryer felt is made endless in conventional manner by interdigitating loop formations 19, 20 each formed as continuous helices provided at the respective fabric ends and inserting a pintle wire into the tunnel formed by and between said formations 19,20. In order to facilitate interdigitation and pintle wire insertion each fabric end 12, 13 has secured to each face thereof, parallel to but spaced a distance from formations 19, 20, strips 31, 32, 34, 34 of a material which constitute the respective one parts of releasable temporary fastening means by having an outer surface which defines a fastener surface capable of releasable attachment to a complementary fastener surface.

In combination with strips 31, 32 there is provided a second part of releasable temporary fastening means in the form of a band 33 of length equal to or greater than the length of the seam and just wider than the separation of strips 31, 32, 34, 34 in the interdigitated disposition of the loop formations 19 20. Band 33 is of flexible sheet material and its free surface is a fastener surface complementary to the fastener surfaces of strips 31, 32.

Preferably, the fastener surfaces are hook and/or loop surfaces, the strips 31, 32, 34, 34 and band 33 being respectively loop and hook fabric, although alternative forms of fastener surface may be provided.

By applying band 33 to a strip 31, 32 at one fabric end, that band can exist as a flap securely attached to the fabric end, which flap can be engaged with the strip existing at the other fabric end to hold the loop elements of the seam in engagement.

Fig. 7 illustrates how the band 33 can be applied to unite the whole seam whilst leaving spaced upstanding loops 33a, b, c. If it happens that seam separation occurs beneath the band 33, a portion 35 can be lifted and access had to the relevant part of the seam without disturbing the rest of the temporary joint.

The invention is not limited to the precise details of the foregoing, and variations can be made thereto within the scope of the invention as defined by the claims.

## Claims

1. A flat woven papermakers' dryer fabric having, at each end (12,13), a respective row of interdigitable formations (19,20) capable of union by a pintle wire (18) to form a flexible joint and further including at the said fabric ends (12,13), a respective one (part 31,32 and 34,34) of the complementary parts (31,32,34,34 and 33) of a temporary fastening means adapted for cooperation, in a relative disposition of the fabric ends (12,13) consistent with engagement of the interdigitating formations (19,20), to maintain such interdigitation, wherein said one part of the complementary parts of said temporary fastening means (31,32,34,34) is arranged to extend transversely of the belt adjacent each end (12,13) of the belt and on each face thereof; and in that the other part (33) of said complementary parts of said temporary fastening means is dimensioned materially to overlie the opposed fabric ends (12,13) in the aforesaid disposition of said ends (12,13) and said complementary parts (31,32 or 34,34) of the temporary fastening means on one or other face of the belt, characterised in that said other part (33) of said complementary parts of said temporary fastening means is selectively separable from said one part (31,32 or 34,34) along the length of the seam.

2. A papermakers' dryer fabric as claimed in claim 1, characterised in that said complementary parts are of hook/pile fabric.

3. A papermakers' dryer fabric as claimed in claim 1 or claim 2, characterised in that said other part of the temporary fastening means is or is mounted on a band (33) dimensioned to extend the length of the seam.

4. A method of seaming a flat woven papermakers' dryer fabric having, at each fabric end (12,13), a respective row of interdigitable formations (19,20) capable of union by a pintle wire (18) to form a flexible joint, and further including, at said fabric ends, (12,13) a respective one (31,32 and 34,34) of the complementary parts (31,32,34,34,33) of a temporary fastening means adapted for cooperation, in a relative disposition of the fabric ends (12,13) consistent with engagement of the interdigitation formations (19,20) to maintain such interdigitation, the method of including the steps of:
(a) providing said one part (31,32 or 34,34) of the complementary parts of said temporary fastening means to extend transversely of the belt adjacent each end (12,13) of the belt and on each face thereof;
(b) selecting one or other side of said belt on which to carry out a seaming operation;
(c) applying the other part (33) of said complementary parts of said temporary fastening means to overlie the one part (31,32 or 34,34) on the selected side of the belt;
(d) engaging the complementary parts of the fastening means [(31,32 and 33) or (34,34 and 33)] to maintain said formations interdigitated and capable of receiving a pintle wire (18);
(e) introducing a pintle wire to engage the interdigitated formations (19,20) to form a flexible joint;
(f) removing said other part (33) of said temporary fastening means; and:
(g) removing said one part of the temporary fastening means (31,32 and 34,34) from each face of the belt, characterised in that during step (e) a selected portion of the incipient seam is exposed by separating a selected portion of said complementary parts (31,32 and 33 or 34,34 and 33) of said temporary fastening means, portions of the belt ends 12,13) at said selected portion of said seam are adjusted to vary the degree of interdigitation of said formations (19,20) to permit easier passage of said pintle wire (18) and said complementary parts of said temporary fastening means are re-engaged.

5. A method as claimed in claim 4 characterised in that said upstanding loops of a band (33) of material including or consisting of said other part of said temporary fastening means are provided along said band (33) and exposure of said selected portion of said seam is effected by moving a selected one of said loops along said seam to said selected position.

## Patentansprüche

1. Flachgewebtes Papiermachergewebe zur Trocknung, das an jedem Ende (12, 13) jeweils eine Reihe zum Ineinandergreifen bestimmter Glieder (19, 20) aufweist, die zur Bildung einer Gelenkverbindung durch einen Gelenkdraht (18) zu verbinden sind, und das ferner an den Gewebeenden (12, 13) jeweils einen (Teil 31, 32 und 34, 34) der Komplementärteile (31, 32, 34, 34 und 33) von temporären Befestigungsmitteln aufweist, die derart ausgebildet sind, daß sie bei Anordnung der Gewebeenden (12, 13) relativ zueinander, bei der die zum Ineinandergreifen bestimmten Glieder (19, 20) ineinandergreifen, zur Aufrechterhaltung dieses Ineinandergreifens miteinander zusammenwirken, wobei der eine Teil der Komplementärteile der temporären Befestigungsmittel (31, 32, 34, 34) derart angeordnet ist, daß er sich nahe jedem Ende (12, 13) und auf jeder Seite des Bandes quer zu dem Band erstreckt; der andere Teil (33) der Komplementärteile der temporären Befestigungsmittel ist so bemessen, daß er die gegenüberliegenden Gewebeenden (12, 13) in der beschriebenen Anordnung der Enden (12, 13) und die Komplementärteile (31, 32 oder 34, 34) der temporären Befestigungsmittel auf der einen oder anderen Seite des Bandes im wesentlichen überlagert,
dadurch gekennzeichnet, daß der andere Teil (33) der Komplementärteile der temporären Befestigungsmittel über die Länge der Verbindungsnaht von dem einen Teil (31, 32 oder 34, 34) abschnittsweise zu trennen ist.

2. Papiermachergewebe nach Anspruch 1,
dadurch gekennzeichnet, daß die Komplementärteile aus einem Haken-Schlingen-Gewebe gebildet sind.

3. Papiermachergewebe nach Anspruch 1 oder 2,
dadurch gekennzeichnet, daß der andere Teil der temporären Befestigungsmittel aus einem Materialstreifen (33) gebildet oder an einem solchen angebracht ist, der so bemessen ist, daß er sich über die Länge des Saumes erstreckt.

4. Verfahren zum Herstellen einer Verbindungsnaht eines flachgewebten Papiermachergewebes, das an jedem Gewebeende (12, 13) jeweils eine Reihe zum Ineinandergreifen bestimmter Glieder (19, 20) aufweist, die zur Bildung einer Gelenkverbindung durch einen Gelenkdraht (18) zu verbinden sind, und das ferner an den Gewebeenden (12, 13) jeweils einen (31, 32 und 34, 34) der Komplementärteile (31, 32, 34, 34, 33) von temporären Befestigungsmitteln aufweist, die derart ausgebildet sind, daß sie bei einer relativen Anordnung der Gewebeenden (12, 13), bei der die zum Ineinandergreifen bestimmten Glieder (19, 20) ineinandergreifen, zur Aufrechterhaltung dieses Ineinandergreifens miteinander zusammenwirken, mit den Verfahrensschritten:
(a) Anordnen des einen Teiles (31, 32 oder 34, 34) der Komplementärteile der temporären Befestigungsmittel derart, daß er sich nahe jedem Ende (12, 13) und auf jeder Seite des Bandes quer zu dem Band erstreckt;
(b) Auswählen der einen oder anderen Seite des Bandes, an der die Verbindungsnaht herzustellen ist;
(c) Aufbringen des anderen Teiles (33) der Komplementärteile der temporären Befestigungsmittel, so daß er den einen Teil (31, 32 oder 34, 34) auf der gewählten Seite des Bandes überlagert;
(d) Ineingriffbringen der Komplementärteile der Befestigungsmittel [(31, 32 und 33) oder (34, 34 und 33)], so daß die Glieder zur Aufnahme eines Gelenkdrahtes (18) miteinander in Eingriff bleiben;
(e) Einsetzen eines Gelenkdrahtes, so daß er zur Bildung einer Gelenkverbindung mit den ineinandergreifenden Gliedern (19, 20) in Eingriff tritt;
(f) Entfernen des anderen Teiles (33) der temporären Befestigungsmittel; und
(g) Entfernen des einen Teiles der temporären Befestigungsmittel (31, 32 und 34, 34) von der jeweiligen Seite des Bandes,
dadurch gekennzeichnet, daß während des Verfahrensschrittes (e) ein ausgewählter Teilbereich der entstehenden Verbindungsnaht dadurch freigelegt wird, daß ein ausgewählter Teilbereich der Komplementärteile (31, 32 und 33 oder 34, 34 und 33) der temporären Befestigungsmittel abgelöst wird, daß sodann Teile der Bandenden (12, 13) in dem ausgewählten Teilbereich der Naht ausgerichtet werden, um den Grad des Ineinandergreifens der Glieder (19, 20) so zu verändern, daß der Gelenkdraht (18) leichter hindurchzuführen ist, und daß schließlich die Komplementärteile der temporären Befestigungsmittel wieder miteinander in Eingriff gebracht werden.

5. Verfahren nach Anspruch 4,
dadurch gekennzeichnet, daß stehende Schlaufen eines Materialstreifens (33), der den anderen Teil der temporären Befestigungsmittel enthält oder bildet, entlang des Materialstreifens (33) vorgesehen sind, und daß das Freilegen des ausgewählten Teilbereiches der Naht dadurch erfolgt, daß jeweils eine der Schlaufen entlang der Naht in die gewählte Position verlagert wird.

## Revendications

1. Etoffe de séchoir de papetiers tissée à plat, ayant à chaque extrémité (12, 13), une rangée respective d'éléments interpénétrants adaptée pour assurer la liaison par un fil pivot (18) pour former un joint flexible et en outre incluant auxdites extrémités de l'étoffe (12, 13), l'une respective (partie 31, 32 et 34, 34) des parties complémentaires (31, 32, 34, 34 et 33) d'un moyen d'accrochage temporaire adaptée pour coopérer dans un arrangement relatif des extrémités de l'étoffe consistant en la coopération des éléments interpénétrants (19, 20), pour maintenir une telle interpénétration, au sein de laquelle ladite partie des parties complémentaires dudit moyen d'accrochage temporaire (31, 32, 34, 34) est agencée pour s'étendre transversalement à la courroie, au voisinage de chaque extrémité (12, 13) de la courroie et sur chaque face de celle-ci, et en ce que l'autre partie (33) desdites parties complémentaires dudit moyen d'accrochage temporaire est matériellement dimensionnée pour recouvrir les extrémités opposées de l'étoffe (12, 13) dans la disposition mentionnée ci-dessus desdites extrémités et lesdites parties complémentaires (31, 32 ou 34, 34) du moyen temporaire d'accrochage sur l'une ou l'autre des faces de la courroie, caractérisée en ce que ladite autre partie (33) desdites parties complémentaires dudit moyen d'accrochage temporaire est détachable sélectivement de ladite partie (31, 32 ou 34, 34) le long de la longueur de la jonction.

2. Etoffe de séchoir pour papetiers selon la revendication 1, caractérisée en ce que lesdites parties complémentaires sont formées de bandes à crochets/boucles.

3. Etoffe de séchoir de papetiers selon la revendication 1 ou 2, caractérisée en ce que ladite autre partie du moyen d'accrochage temporaire est ou est montée sur une bande dimensionnée pour s'étendre le long de la jonction.

4. Procédé d'accrochage d'une étoffe de séchoir de papetiers tissée à plat, ayant à chaque extrémité de l'étoffe (12, 13), une rangée respective d'éléments interpénétrants (19, 20) adaptée pour assurer la liaison par un fil pivot (18) pour former un joint flexible, et incluant en outre, auxdites extrémités de l'étoffe (12, 13), l'une respective (31, 32 et 34, 34) des parties complémentaires (31, 32, 34, 34, 33) d'un moyen d'accrochage temporaire adaptée pour coopérer dans une disposition relative des extrémités de l'étoffe consistant en une coopération des éléments interpénétrants (19, 20), pour maintenir une telle interpénétration, le procédé comportant les étapes consistant à :
(a) se procurer ladite partie (31, 32 ou 34, 34) des parties complémentaires dudit moyen d'accrochage temporaire s'étendant transversalement à la courroie, au voisinage de chaque extrémité (12, 13) de la courroie et sur chaque face de celle-ci ;
(b) sélectionner l'un ou l'autre côté de ladite courroie sur lequel on procédera à l'opération d'accrochage ;
(c) appliquer l'autre partie (33) desdites parties complémentaires dudit moyen d'accrochage temporaire pour recouvrir l'une des parties (31, 32 ou 34, 34) sur le côté sélectionné de la courroie ;
(d) mettre les parties complémentaires du moyen d'accrochage [(31, 32 et 33) ou (34, 34 et 33)] pour maintenir lesdits éléments interpénétrants et adaptés pour recevoir un fil pivot (18) ;
(e) introduire un fil pivot pour mettre en prise les éléments interpénétrants (19, 20) pour former un joint flexible ;
(f) retirer ladite autre partie (33) dudit moyen d'accrochage temporaire ; et
(g) retirer ladite partie du moyen d'accrochage temporaire (31, 32 et 34,34) de chaque face de la courroie,
caractérisé en ce que durant l'étape (e) une portion sélectionnée de la jonction en formation est visible par séparation d'une portion sélectionnée des parties complémentaires (31, 32 et 33 ou 34, 34 et 33) dudit moyen d'accrochage temporaire, des portions des extrémités de la courroie (12, 13) auxdites portions sélectionnées de ladite jonction sont ajustées pour modifier le degré d'interpénétration desdits éléments (19, 20) pour permettre un passage plus facile dudit fil pivot (18) et lesdites parties complémentaires dudit moyen d'accrochage temporaire sont remises en prise.

5. Procédé selon la revendication 4, caractérisé en ce que lesdites boucles dressées d'une bande (33) de matériaux incluant ou consistant en ladite autre partie dudit moyen d'accrochage complémentaire sont prévues le long de ladite bande (33) et l'exposition de ladite portion sélectionnée dudit joint est réalisée par déplacement d'une boucle sélectionnée parmi lesdites boucles le long de ladite jonction vers ladite position sélectionnée.
